# EUROPÄISCHE PATENTSCHRIFT

(11) **EP 1 621 459 B1**
(45) Veröffentlichungstag und Bekanntmachung des Hinweises auf die Patenterteilung: **10.12.2008**
(21) Anmeldenummer: 05016293.2
(22) Anmeldetag: 27.07.2005
(51) Int. Cl.: B64D 1/16, B64D 11/02

(54) **Ablassvorrichtung für ein Flugzeug**
Aircraft drain system
Système de drainage pour avion

(30) Priorität: 27.07.2004 DE 102004036296; 27.07.2004 US 591332 P
(43) Veröffentlichungstag der Anmeldung: 01.02.2006
(73) Patentinhaber: Airbus Deutschland GmbH (HRB 43527), 21129 Hamburg (DE)
(72) Erfinder: Hoffjann, Claus, 21629 Neu Wulmstorf (DE); Schuldzig, Hansgeorg, 21635 Jork (DE); Gründel, Harald, 22765 Hamburg (DE); Heinrich, Hans-Jürgen, 22609 Hamburg (DE)
(74) Vertreter: Kopf, Korbinian Paul

(56) Entgegenhaltungen:
- DE-A1- 10 142 696
- GB-A- 1 255 617
- US-A- 4 275 603
- US-A- 5 655 732

## Beschreibung

Die vorliegende Erfindung betrifft Ablassvorrichtungen für Flugzeuge. Insbesondere betrifft die vorliegende Erfindung eine Ablassvorrichtung für ein Flugzeug, ein Flugzeug, umfassend eine entsprechende Ablassvorrichtung, und ein Verfahren.

In Reiseflughöhen von heutigen Verkehrsflugzeugen herrschen Außentemperaturen von bis zu - 60°C. Wasserhaltige Flüssigkeiten aus dem Galleybereich oder aus den Handwaschbecken sowie aus der Frachtraumdrainage, die ohne besondere Beheizung nach außen gelassen werden, würden sofort vereisen bzw. Eisklumpen bilden und damit das Auslaufrohr verstopfen. Aus diesem Grunde werden die heutigen Auslaufstutzen (Drain Masts) beheizt.

Auslaufstutzen oder Ablassvorrichtungen nach dem Stand der Technik weisen beispielsweise den Nachteil auf, dass sie zur Beheizung der abzulassenden Flüssigkeit einen erhöhten Energiebedarf aufweisen. Diese Energie muss durch die Bordversorgung bereitgestellt werden. Demnach sind in bekannten Ablassvorrichtungen extra Heizelemente vorgesehen, welche außerdem zu einem zusätzlichen Platzbedarf führen können.

US 5,655,732 offenbart eine Vorrichtung zur Abwasserdrainage für Flugzeuge sowie zur Beheizung eines Drainagerohres. Die Heizluft wird aus einem thermischen Prozess im Triebwerk entnommen.

Es ist eine Aufgabe der vorliegenden Erfindung, eine verbesserte Ablassvorrichtung für Flugzeuge bereitzustellen, welche sich insbesondere durch Platzeinsparung und Energieeffizienz auszeichnet.

Die obige Aufgabe wird mit einer Ablassvorrichtung mit den Merkmalen des Anspruchs 1 gelöst.

Bei den abzulassenden Flüssigkeiten kann es sich beispielsweise um Grauwasser, also um leicht verunreinigtes Wasser, z. B. aus Waschbecken und Galley-Spülbecken aus dem Küchenbereich des Flugzeugs, handeln. Bei den abzulassenden Gasen kann es sich beispielsweise um Abgase, welche aus einem thermischen Prozess oder elektrochemischen Prozess an Bord des Luftfahrzeuges, wie beispielsweise einem Brennstoffzellenprozess resultieren, handeln.

Auf diese Art und Weise können die abgelassenen Flüssigkeiten oder Gase innerhalb der Ablassvorrichtung beheizt werden, so dass eine Vereisung bzw. die Ausbildung von Eisklumpen vermieden wird. Weiterhin kann über die Ablassvorrichtung Außenluft in das Flugzeug eingeleitet werden. Die Außenluft kann beispielsweise einem thermischen Prozess oder elektrochemischen Prozess an Bord des Flugzeuges oder einem Brennstoffzellenprozess zugeführt werden. Somit wird vorteilhafterweise eine Ablassvorrichtung bereitgestellt, welche nicht nur zum Ablassen von Flüssigkeiten oder Gasen aus dem Flugzeug, sondern auch zum Einleiten von Außenluft in das Flugzeug verwendbar ist.

Gemäß der vorliegenden Erfindung, wird das Kühlmittel einem Brennstoffzellenprozeß an Bord des Flugzeugs zugeführt. Hierbei wird das Kühlmittel durch den Brennstoftzellenprozeß aufgewärmt und wird zur Kühlung des vom Brennstoffzellenprozeß eingesetzt.

Vorteilhafterweise kann somit die Abwärme, die aus einem Brennstoffzellenprozess an Bord des Luftfahrzeugs entsteht und ohnehin nach außen abgeführt werden muss, über das Gehäuse der Ablassvorrichtung abgeführt werden. Dabei wird gleichzeitig die für die Ablassvorrichtung erforderliche Heizwärme bereitgestellt, um ein Einfrieren der durch die Ablassvorrichtung abgeleiteten Flüssigkeit oder der abgeleiteten Gase in Reiseflughöhe oder bei sonstigen kalten Umgebungsbedingungen zu vermeiden.

Gemäß einem weiteren Ausführungsbeispiel der vorliegenden Erfindung umfasst die Ablassvorrichtung weiterhin eine Druckregeleinheit, wobei das Rohr einen Endbereich aufweist und zum Einleiten von Luft in das Flugzeug mit seinem Endbereich einen Winkel von 0° bis etwa 45° zur Flugrichtung aufweist, so dass in dem Rohr ein durch die Fluggeschwindigkeit hervorgerufener Staudruck entsteht. Hierbei ist der Staudruck durch die Druckregeleinheit einstellbar.

Vorteilhafterweise wird durch die Anordnung des Rohres in einem Winkel zwischen etwa 0° bis etwa 45° zur Flugrichtung die Möglichkeit bereitgestellt, Außenluft unter entsprechend hohem Staudruck aufzunehmen. Ggf. kann der Staudruck nachfolgend durch die Druckregeleinheit entsprechend heruntergeregelt werden, so dass die aufgenommene Außenluft dann beispielsweise unter einem gewünschten Prozessdruck und bei einer gewünschten Temperatur einem Brennstoffzellenprozess an Bord des Flugzeugs zugeführt werden kann.

Gemäß einem weiteren Ausführungsbeispiel der vorliegenden Erfindung weist die Ablassvorrichtung weiterhin einen Luftverdichter und ein Umschaltventil auf, wobei der Staudruck durch den Luftverdichter erzeugbar ist und wobei der Luftverdichter über das Umschaltventil auf Kabinenluft geschaltet werden kann.

Vorteilhafterweise kann somit der zur Belieferung der bordinternen Brennstoffzelle nötige Staudruck auch dann erzeugt werden, wenn die Fluggeschwindigkeit nicht hoch genug ist bzw. wenn das Flugzeug am Boden steht. Weiterhin ist es in diesem Fall möglich, dass der Luftverdichter sich der Kabinenluft bedient, so dass eine entsprechende Vorwärmung zumindest teilweise eingespart werden kann.

Gemäß einem weiteren Ausführungsbeispiel der vorliegenden Erfindung umfasst die Ablassvorrichtung weiterhin eine Kühlfläche, wobei das Kühlmittel vor seiner Zuführung zu dem thermischen Prozess oder elektrochemischen Prozess durch die Kühlfläche kühlbar ist.

Somit ist es vorteilhafterweise möglich, die geringe Außentemperatur zu nutzen, um das Kühlmittel weiter herabzukühlen. Die entsprechende Abkühlung erfolgt hierbei innerhalb der Ablassvorrichtung unter Verwendung der Kühlfläche, so dass zusätzliche Bauteile nicht erforderlich sind. Somit ist einerseits eine geschickte Ausnutzung der niedrigen Außentemperaturen und andererseits eine platzsparende Gesamtanordnung möglich.

Gemäß einem weiteren Ausführungsbeispiel der vorliegenden Erfindung handelt es sich bei der abzulassenden Flüssigkeit um Grauwasser aus dem Bordbetrieb des Flugzeugs und bei den abzulassenden Gasen um Abluft aus dem thermischen Prozess oder elektrochemischen Prozess an Bord des Flugzeugs.

Vorteilhafterweise werden somit vier Funktionen in einer Anordnung integriert, nämlich die Beheizung des Drain Masts bzw. des Rohres, die Kühlung eines im Inneren der Flugzeugzelle liegenden thermischen oder elektrochemischen Prozesses, wie z. B. den einer Brennstoffzelle, die Versorgung dieses Prozesses mit Außenluft und das Ablassen von Überschussgasen aus diesem Prozess. Darüber hinaus bietet die Anordnung den Vorteil, dass für die Kühlfunktion nicht in die Zellenstruktur des Flugzeugs eingegriffen werden muss, d. h. dass kein zusätzlicher Kühler bzw. keine Lufteinleitung zu Kühlzwecken an der Außenhaut des Flugzeugs nötig ist. Eine signifikante Erhöhung des Luftwiderstandes kann somit vermieden werden.

Gemäß einem weiteren Ausführungsbeispiel der vorliegenden Erfindung umfasst die Ablassvorrichtung weiterhin eine elektrische Heizvorrichtung, wobei das Rohr durch die elektrische Heizvorrichtung zusätzlich beheizbar ist.

Somit ist es vorteilhaft möglich, zusätzliche Heizenergie dem Rohr zuzuführen. Dies kann beispielsweise dann erforderlich sein, wenn die Brennstoffzelle an Bord des Flugzeugs nicht genügend thermische Überschussenergie hervorbringt, um für eine entsprechend ausreichende Beheizung des Ablassrohres zu sorgen.

Gemäß einem weiteren Ausführungsbeispiel der vorliegenden Erfindung ist ein Wärmepumpenprozess zuschaltbar, welcher die Heizleistung zum Beheizen des Rohres oder die Kühlleistung zum Kühlen des thermischen oder elektrochemischen Prozesses erhöht.

Vorteilhafterweise kann der Wärmepumpenprozess dem Kühlmedium zwischengeschaltet werden, so dass die Heizer der Ablassrohre und damit verbunden die Vorlauftemperatur des Kühlers auf ein höheres Temperaturniveau gehoben werden. Dadurch kann beispielsweise der Wirkungsgrad der Brennstoffzelle oder die Ablassgeschwindigkeit der Flüssigkeit oder der Gase durch das Rohr erhöht werden.

Gemäß einem weiteren Ausführungsbeispiel der vorliegenden Erfindung wird ein Verfahren zum Ablassen von Flüssigkeiten oder Gasen aus einem Flugzeug oder zum Einleiten von Luft in das Flugzeug durch eine Ablassvorrichtung bereitgestellt, wobei die Ablassvorrichtung ein Rohr und ein Kühlmittel aufweist und das Verfahren ein Beheizen des Rohrs durch das Kühlmittel oder durch einen Wärmetauscher umfasst, wobei das Rohr zum Ablassen von Flüssigkeiten oder Gasen aus dem Flugzeug oder zum Einleiten von Luft in das Flugzeug verwendbar ist.

Auf diese Art und Weise können die abgelassenen Flüssigkeiten oder Gase oder die zugeführte Außenluft innerhalb der Ablassvorrichtung beheizt werden, so dass eine Vereisung bzw. die Ausbildung von Eisklumpen wirksam vermieden wird.

Weitere Aufgaben, Ausführungsformen und Vorteile der Erfindung ergeben sich aus den Unteransprüchen.

Im Folgenden werden mit Verweis auf die Figuren bevorzugte Ausführungsbeispiele der vorliegenden Erfindung beschrieben.

Fig. 1 zeigt eine schematische Darstellung eines Kühl-/Heizprozesses gemäß einem Ausführungsbeispiel der vorliegenden Erfindung.

Fig. 2 zeigt eine schematische Darstellung einer Ablassvorrichtung gemäß einem Ausführungsbeispiel der vorliegenden Erfindung.

In der folgenden Figurenbeschreibung werden für gleiche oder ähnliche Elemente die gleichen Bezugsziffern verwendet.

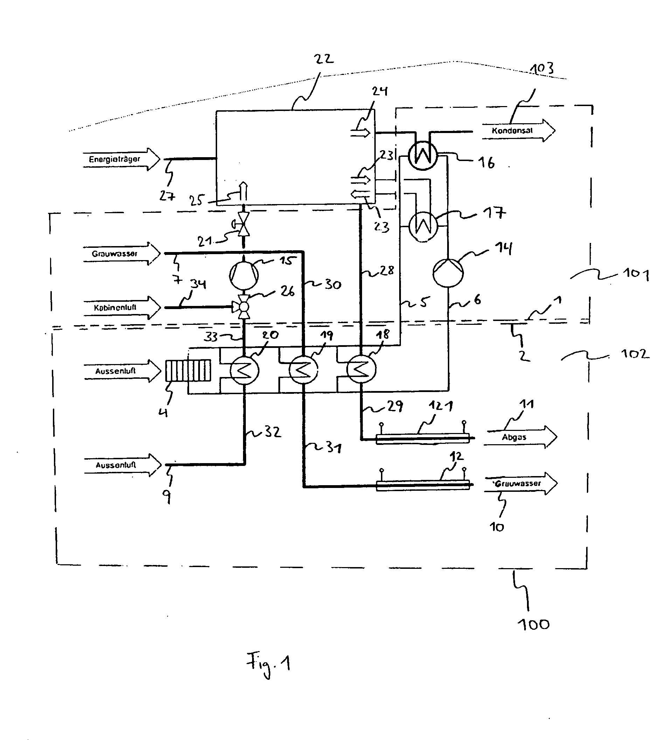

Fig. 1 zeigt eine schematische Darstellung eines Kühl-/Heizprozesses gemäß einem Ausführungsbeispiel der vorliegenden Erfindung. Wie Fig. 1 zu entnehmen ist, ist die erfindungsgemäße Ablassvorrichtung 100 maßgeblicher Bestandteil der Kühl- bzw. Heizprozesse, wie sie an Bord eines Flugzeugs, beispielsweise beim Ablassen von Grauwasser oder Gasen aus dem Flugzeug oder beim Einleiten von Außenluft in das Flugzeug hinein, erforderlich sind. Hierbei besteht die Ablassvorrichtung 100 im Wesentlichen aus einer Reihe von Wärmetauschern 16, 17, 18, 19, 20, welche sich durch vorteilhafte Nutzung der erhöhten Temperatur der Abluft eines thermischen oder elektrochemischen Prozesses an Bord des Flugzeugs und der relativ niedrigen Temperatur außerhalb des Flugzeugs auszeichnen. Entsprechende Wärmetauscher sind im Stand der Technik wohl bekannt und sollen hier nicht näher dargestellt werden. Zu beachten ist allerdings, dass sich hier eine Vielzahl verschiedener Systeme zum Einsatz als Wärmetauscher eignet. Wichtig ist hierbei, dass Wärme vom Kühlmittel im Kreislauf 5, 6 an die entsprechenden Rohre 23, 24, 28, 29, 30, 31, 32, 33 bzw. die darin enthaltenen Gase oder Flüssigkeiten abgegeben wird (oder umgekehrt).

Wärmetauscher 16 ist hierbei ein Wärmetauscher für einen Kondensator, durch welchen die Abluft 24 aus dem thermischen oder elektrochemischen Prozess 22, bei dem es sich beispielsweise um einen Brennstoffzellenprozess handeln kann, kondensiert wird. Das resultierende Kondensat 103 wird abgeleitet. Dem thermischen oder elektrochemischen Prozess 22 wird hierbei ein Energieträger 27 zugeführt, welcher nachfolgend unter Beimischung einer Zuluft 25 beispielsweise im Wesentlichen in Energie, Sauerstoff und Frischwasser umgewandelt wird. Die dabei entstehende überschüssige Prozesswärme kann über Abluft 24 abgeführt werden. Die Wärmeenergie der Abluft 24 wird dabei über Wärmetauscher 16 teilweise in den Kühlmittelkreislauf 5, 6 eingespeist.

Der Kühlmittelkreislauf 5, 6 besteht hierbei aus einem Kühl-Heizmediumrücklauf 5 und einem Kühl-Heizmediumvorlauf 6. Das Kühlmedium bzw. Heizmedium, bei dem es sich beispielsweise um eine entsprechende Flüssigkeit handeln kann, wird hierbei innerhalb eines Rohres oder einer Rohrleitungssystem 5, 6 transportiert.

Über den Wärmetauscher 17 kann der thermische Prozess 22 an entsprechender Stelle und zu einem entsprechenden Zeitpunkt in Form einer Prozesskühlung 23 gekühlt werden. Hierbei kann einerseits der Wirkungsgrad des thermischen oder elektrochemischen Prozesses erhöht werden. Andererseits führt die Prozesskühlung 23 vorteilhaft zu einer Erhöhung der Temperatur im Vorlauf 6 des Kühlkreislaufs, so dass das Kühlmittel nun zum Beheizen von Wasser oder Luft verwendet werden kann.

Die Heiz- bzw. Kühlflüssigkeit wird durch eine Umwälzpumpe 14 umgepumpt. Über die Pumpengeschwindigkeit sowie das Zusammenschalten mit einem weiteren Kühler/Heizer kann bei entsprechender Dimensionierung die Kühl- bzw. Heizleistung reguliert werden. Die beim thermischen oder elektrochemischen Prozess 22 entstehenden Abgase 11 werden über entsprechende Abgasleitungen 28, 29 aus der Brennstoffzellenanordnung bzw. dem Reaktor 22 abgeleitet. Damit die Abgase 11 bei Ableitung aus dem Flugzeug nicht ausfrieren bzw. das darin enthaltene Wasser keine Vereisung der Abgasleitung 29 ausbildet, können die Abgase über Wärmetauscher 18 beheizt werden. Weiterhin ist es möglich, dass zusätzlich zur kühlmittelkreislaufseitigen Beheizung der Abgase über Wärmetauscher 18 eine weitere Beheizung 12 für die Ablassrohre 29 vorgesehen ist. Hierbei kann es sich beispielsweise um eine elektrische Beheizung 121 handeln. Eine Vereisung der Abgasrohre 29 wird somit wirksam verhindert.

Weiterhin ist ein Wärmetauscher 19 vorgesehen, welcher die vom Kühlmittelkreislauf 5, 6 bereitgestellte Wärme nutzt, um abzulassendes Grauwasser 7 aus dem Bordbetrieb vor dem Ablassen aus dem Flugzeug aufzuwärmen bzw. um die Rohrleitungen 30, 31 zum Transport des Grauwassers aus dem Flugzeug vor Vereisung zu schützen. Zusätzlich zu dem Wärmetauscher 19 können die Grauwasserablassrohre 31 über Heizer 12 elektrisch beheizt werden, so dass auch bei einer unzureichenden Wärmemenge, welche über den Kühlmittelkreislauf 5, 6 bereitgestellt wird, eine Vereisung des Grauwasserauslasses 10 verhindert wird. Heizer 12 und 121 können auch zu einem einzelnen Heizer zusammengefasst sein.

Weiterhin wird ein Wärmetauscher 20 bereitgestellt, welcher zum Beheizen von Stauluft vorgesehen ist. Bei der Stauluft handelt es sich um Außenluft 9, welche über eine Stauluftleitung 32 von außen in die Ablassvorrichtung 100 zugeführt wird. Das Rohr 9 zum Einleiten von Luft in das Flugzeug weist mit seinem Endbereich einen Winkel von etwa 0° bis etwa 45° zur Flugrichtung auf, so dass in dem Rohr 9 ein durch die Fluggeschwindigkeit hervorgerufener Staudruck entsteht. Die derart eingefangene Stauluft wird nachfolgend über Stauluftleitung 32 dem Wärmetauscher 20 zugeführt und dort auf eine entsprechende Prozesstemperatur gebracht. Nachfolgend wird die erwärmte Stauluft über Rohrleitung 33 einem Umschaltventil 26 zugeführt, über welches zusätzlich oder alternativ zur Stauluft Kabinenluft zugeführt werden kann.

Nachfolgend kann die über Leitung 34 zugeführte Kabinenluft bzw. die über Leitung 33 zugeführte Stauluft durch den Verdichter 15 weiter verdichtet werden. Dies kann insbesondere dann erforderlich sein, falls die Fortbewegungsgeschwindigkeit des Flugzeugs unzureichend hoch ist bzw. sich das Flugzeug am Boden befindet, so dass kein ausreichender Stauluftdruck erzeugt werden kann. Bei dem Verdichter 15 kann es sich beispielsweise um einen elektrischen Verdichter handeln, welcher seine Energie aus bordinternen Quellen erhält.

Über das nachgeschaltete Druckventil 21 ist der Druck der zugeführten Stauluft oder Kabinenluft entsprechend regelbar. Nachfolgend kann die erfindungsgemäß angewärmte Außenluft als Zuluft 25 dem thermischen oder elektrochemischen Prozess 22 zugeführt werden.

Wie Fig. 1 zu entnehmen, ist die Ablassvorrichtung teilweise auf der Innenseite 101 des Flugzeugs und teilweise auf der Außenseite 102 des Flugzeugs angeordnet. Die Grenze zwischen Innenbereich 101 und Außenbereich 102 wird hierbei durch den Rumpf 1 und dessen Außenhaut 2 definiert. Der im Außenbereich 102 des Flugzeugs angeordnete Teil der Ablassvorrichtung 100 ist hierbei von der Außenhaut 3 der Ablassvorrichtung 100 zumindest teilweise umschlossen.

Zum weiteren Herabkühlen des im Kühlkreislauf 5, 6 fließenden Kühlmittels wird, nachdem das Kühlmittel die Wärmetauscher 16, 17, 18, 19 und 20 durchlaufen hat, Kühler 4 eingesetzt. Der Kühler 4 befindet sich hierbei im Außenbereich 102 des Flugzeugs und hat direkten Kontakt zur Außenluft. Somit ist eine effektive Kühlung gewährleistet, wenn sich das Flugzeug in einer entsprechenden Flughöhe befindet bzw. wenn die Außentemperatur entsprechend niedrig ist.

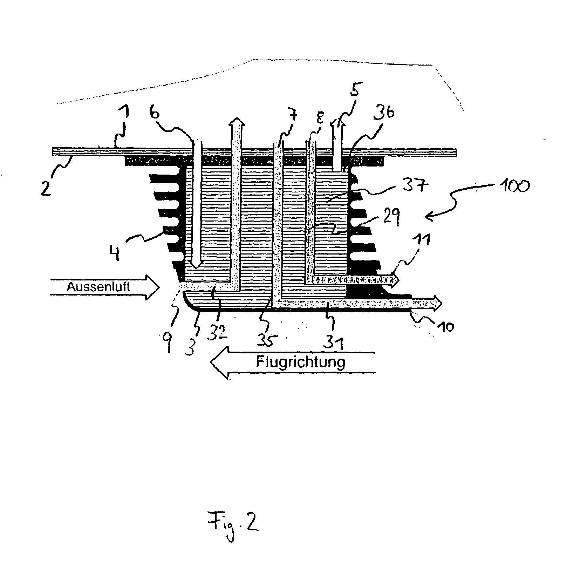

Fig. 2 zeigt eine schematische Darstellung einer Ablassvorrichtung gemäß eines Ausführungsbeispiels der vorliegenden Erfindung. Wie in Fig. 2 zu erkennen, weist die Ablassvorrichtung 100, welche zu einem wesentlichen Teil im Außenbereich des Flugzeugs 1 angeordnet ist, eine Außenhaut 3 mit einem Kühler mit Kühlrippen 4 auf. Weiterhin weist die Ablassvorrichtung 100 Grauwasserablassrohre 7, 31 auf, welche dem Ableiten von Flüssigkeiten aus Galleys und Handwaschbecken dienen. Diese Rohre 7, 31 werden von einem Flüssigkeitsheizer 37 ummantelt, wobei der Zulauf der Heizflüssigkeit am Auslaufende 35 des Rohres 31 und der Rücklauf am oberen Ende 36 des Flüssigkeitsheizers 37 angeordnet ist.

Der Flüssigkeitsheizer 37, welcher Wärmetauscher 18, 19, 20 umfasst, ist zusätzlich mit einem elektrischen Heizer umgeben (nicht gezeigt in Fig. 2), um die Heizfunktion auch bei inaktiver oder unzureichender Flüssigkeitsheizung zu gewährleisten.

Der Vorlauf 6 des Flüssigkeitsheizers 37 wird aus einem Kühlkreis eines thermischen oder elektrochemischen Prozesses (s. Fig. 1) im Inneren des Flugzeugs gespeist. Dies kann beispielsweise ein Brennstoffzellenprozess sein, bei welchem die Zellkühlung oder die Wasserkondensation durch diesen Kühlkreis realisiert wird. Der Rücklauf 5 des Drain-Mastseitigen Flüssigkeitsheizers 37 wird durch einen an der Außenhaut 3 des Drain-Mast-Gehäuses angeordneten Kühler 4 geführt. Somit ist eine effiziente Kühlung des Kühlmittels im Rücklauf 5 gegeben. Die Kühlflüssigkeit des Rücklaufs 5 wird somit auf die benötigte Kühltemperatur des innenliegenden thermischen oder elektrochemischen Prozesses heruntergekühlt.

Weiterhin wird die Heiz- bzw. Kühlflüssigkeit durch eine Umwälzpumpe (nicht gezeigt in Fig. 2) umgepumpt. Über die Pumpengeschwindigkeit sowie das Zusammenschalten mit einem weiteren Kühler/Heizer kann bei entsprechender Dimensionierung die Kühl- bzw. Heizleistung reguliert werden.

Zusätzlich lässt sich noch ein Wärmepumpenprozess zwischen dem innenliegenden thermischen oder elektrochemischen Prozess, der gekühlt werden soll, und den Heizer des Drain Masts 100 schalten, um Drain-Mast-seitig die Heizleistung und innenbords die Kühlleistung zu erhöhen. Somit kann beispielsweise der Wirkungsgrad einer Brennstoffzellenanordnung im Inneren des Flugzeugs optimiert werden.

An der Vorderseite des Drain Masts 100 befindet sich eine Stauluftöffnung 9 mit einer dahinterliegenden Rohrleitung 32, durch welche die für den thermischen oder elektrochemischen Prozess (siehe Bezugszeichen 22 in Fig. 1) benötigte Luft bereitgestellt und durch Flüssigkeitsheizer 37 auf Prozesstemperatur gebracht wird.

Weiterhin dazu befindet sich an der Rückseite des Drain Masts 100 ein Rohrauslauf 11 zum Ablassen evtl. Gasüberschüsse aus einem Brennstoffzellenprozess (sog. Purge-Vorgang). Da dieses Überschussgas Feuchtigkeit enthalten kann, ist es erforderlich, dass auch dieses Rohr 29 beheizt wird.

Somit wird mit der beschriebenen Ablassvorrichtung 100 Abwärme, die aus einem thermischen oder elektrochemischen Prozess, wie beispielsweise einem Brennstoffzellenprozess, an Bord des Luftfahrzeugs nach außen abgeführt werden muss, über das Gehäuse des sog. Drain Masts abgeführt und dabei gleichzeitig die für den Drain Mast 100 erforderliche Heizwärme bereitgestellt, um ein Einfrieren der durch den Drain Mast 100 abgeleiteten Flüssigkeit während des Fluges oder bei sonstigen kalten Umgebungsbedingungen zu vermeiden.

Die Vorteile liegen hierbei in der Integration von vier Funktionen in einer Anordnung, nämlich der Beheizung des Drain Masts 100, der Kühlung eines im Inneren der Flugzeugzelle liegenden thermischen oder elektrochemischen Prozesses, wie z. B. den einer Brennstoffzelle, der Versorgung dieses Prozesses mit Außenluft und dem Ablassen von Überschussgasen aus diesem Prozess. Darüber hinaus bietet die Anordnung den Vorteil, dass für die Kühlfunktion nicht in die Zellenstruktur des Flugzeugs eingegriffen werden muss, d. h. dass kein zusätzlicher Kühler bzw. keine Lufteinleitung zu Kühlzwecken an der Außenhaut des Flugzeugs nötig ist. Eine signifikante Erhöhung des Luftwiderstandes kann somit vermieden werden.

Eine Ansaugung der von einer Brennstoffzelle benötigten Luft über den Drain Mast mittels Staurohr 32 bietet darüber hinaus den Vorteil, dass die Stauluft mit dem Kühl-/Heizmedium im Gegenstrom vorgewärmt werden kann, um danach der Brennstoffzelle mit optimaler Betriebstemperatur bereitgestellt zu werden.

Die Erfindung beschränkt sich in ihrer Ausführung nicht auf die in den Figuren dargestellten bevorzugten Ausführungsformen. Vielmehr wird die Erfindung lediglich durch den Wortlaut der Ansprüche beschränkt..

Ergänzend sei darauf hingewiesen, dass "umfassend" keine anderen Elemente oder Schritte ausschließt und "eine" oder "ein" keine Vielzahl ausschließt. Bezugszeichen in den Ansprüchen sind nicht als Einschränkungen anzusehen.

## Patentansprüche

1. Ablassvorrichtung für ein Flugzeug, umfassend:
eine Brennstoffzelle;
ein Rohr (30, 31) zum Ablassen von Flüssigkeiten oder Gasen aus dem Flugzeug;
eine Rohrleitung (32) zum Zuführen von Stauluft zum Brennstoffzellenprozess der Brennstoffzelle;
ein Kühlmittel;
wobei die Ablassvorrichtung zum Beheizen des Rohres (30, 31) und der Rohrleitung (32) durch das Kühlmittel eingerichtet ist;
wobei das Kühlmittel dem Brennstoffzellenprozess der Brennstoffzelle zugeführt ist;
wobei der Brennstoffzellenprozess zum Aufwärmen des Kühlmittels ausgeführt ist;
wobei das Kühlmittel zur Kühlung des Brennstoffzellenprozesses eingesetzt ist; und
wobei sich das Kühlmittel in einem Kühlmittelkreislauf (5, 6) befindet.

2. Ablassvorrichtung nach Anspruch 1, ferner aufweisend einen Wärmetauscher (19), wobei das Rohr (30, 31) mittels des Wärmetauschers (19) beheizbar ist.

3. Ablassvorrichtung nach einem der Ansprüche 1 bis 2, weiterhin umfassend:
eine Druckregeleinheit (21);
wobei die Rohrleitung (32) einen Endbereich aufweist;
wobei die Rohrleitung (32) zum Einleiten von Luft in das Flugzeug mit seinem Endbereich einen Winkel von 0° bis etwa 45° zur Flugrichtung aufweist, so dass in der Rohrleitung (32) ein durch die Fluggeschwindigkeit hervorgerufener Staudruck entsteht; und
wobei der Staudruck durch die Druckregeleinheit (21) regelbar ist.

4. Ablassvorrichtung nach einem der Ansprüche 1 bis 3, weiterhin umfassend:
eine Kühlfläche (4) die derart eingerichtet ist, dass das Kühlmittel vor seiner Zuführung zu dem Brennstoffzellenprozess durch die Kühlfläche (4) kühlbar ist.

5. Ablassvorrichtung nach einem der Ansprüche 1 bis 4,
wobei es sich bei der abzulassenden Flüssigkeit um Grauwasser aus dem Bordbetrieb handelt; und
wobei es sich bei den abzulassenden Gasen um Abluft aus dem Brennstoffzellenprozess handelt.

6. Ablassvorrichtung nach einem der Ansprüche 1 bis 5, weiterhin umfassend:
eine elektrische Heizvorrichtung (12);
wobei das Rohr (30, 31) durch die elektrische Heizvorrichtung (12) zusätzlich beheizbar ist.

7. Ablassvorrichtung nach einem der Ansprüche 1 bis 6, ferner aufweisend eine Einrichtung zum Zuschalten eines Wärmepumpenprozesses,
wobei der Wärmepumpenprozess eine Heizleistung zum Beheizen des Rohres (30, 31) oder eine Kühlleistung zum Kühlen des thermischen oder elektrochemischen Prozesses (22) erhöht.

8. Flugzeug, umfassend eine Ablassvorrichtung nach einem der Ansprüche 1 bis 7.

9. Flugzeug nach Anspruch 8, weiterhin umfassend eine Flugzeugkabine mit einer Kabinenluft; die Ablassvorrichtung umfassend:
einen Luftverdichter (15) und;
ein Umschaltventil (26);
wobei der Luftverdichter (15) zum weiteren Verdichten der Stauluft ausgeführt ist; und
wobei der Luftverdichter (15) über das Umschaltventil (26) auf die Kabinenluft geschaltet werden kann.

10. Verfahren zum Ablassen von Flüssigkeiten oder Gasen aus einem Flugzeug durch eine Ablassvorrichtung mit einem Rohr (30, 31) und einem Kühlmittel, umfassend die folgenden Schritte:
Ablassen von Flüssigkeiten oder Gasen aus dem Flugzeug durch das Rohr (30, 31);
Zuführen von Stauluft zum Brennstoffzellenprozess einer Brennstoffzelle durch eine Rohrleitung (32);
Zuführen des Kühlmittels zum Brennstoffzellenprozess an Bord des Flugzeugs;
Aufwärmen des Kühlmittels durch den Brennstoffzellenprozess; und
Kühlen des Brennstoffzellenprozesses durch das Kühlmittel; und
Beheizen des Rohrs (30, 31) und der Rohrleitung (32) durch das Kühlmittel;
wobei das Kühlmittel zwischen dem Brennstoffzellenprozess, dem Rohr (30, 31) und der Rohrleitung (32) einen Kühlmittelkreislauf bildet.

## Claims

1. A drain system for an aircraft, comprising:
a fuel cell;
a mast (30, 31) for draining liquids or gases from the aircraft;
a pipeline (32) for delivering ram air to the fuel cell process of the fuel cell;
a coolant;
wherein the drain system is adapted for heating the mast (30, 31) and the pipeline (32) by means of the coolant;
wherein the coolant is delivered to the fuel cell process of the fuel cell;
wherein the fuel cell process is adapted for heating the coolant;
wherein the coolant is used for cooling the fuel cell process; and
wherein the coolant is located inside a coolant circuit (5, 6).

2. The drain system of claim 1, further comprising a heat exchanger (19), wherein the mast (30, 31) is adapted for being heated by the heat exchanger (19).

3. The drain system of one of claims 1 to 2, furthermore comprising:
a pressure control unit (21);
wherein the pipeline (32) has an end region;
wherein the pipeline (32) is angled relative to the aircraft heading by an angle between approximately 0° and 45° in order to draw air into the aircraft, namely such that the air speed causes ram pressure to build up in the pipeline (32); and
wherein the dynamic pressure can be a regulated with the pressure control unit (21).

4. The drain system of one of claims 1 to 3, furthermore comprising:
a cooling surface (4), adapted for cooling the coolant with the aid of the cooling surface before it is delivered to the fuel cell process.

5. The drain system of one of claims 1 to 4,
wherein the liquid to be drained consists of gray water accumulated on board the aircraft during its operation; and
wherein the gases to be discharged consist of exhaust air produced by the fuel cell process.

6. The drain system of one of claims 1 to 5,
an electric heater (12);
wherein the mast (30, 31) can be additionally heated by means of the electric heater (12).

7. The drain system of one of claims 1 to 6, further comprising a device for additionally switching on a heat pump process,
wherein the heat pump process increases a heating power for heating the mast (30, 31) or a cooling power for cooling the thermal or electrochemical process (22).

8. An aircraft comprising a drain system of one of claims 1 to 7.

9. Aircraft of claim 8, further comprising an aircraft cabin comprising cabin air; the drain system comprising:
an air compressor (15) and;
a change-over valve (26);
wherein ram air can be further compressed with the aid of the air compressor (15); and
wherein the air compressor (15) can be changed over to cabin air by means of the change-over valve.

10. A method for draining liquids or gases from an aircraft by means of a drain system that contains a mast (30, 31) and a coolant, with said method comprising the following steps:
draining liquids or gases from the aircraft by means of the mast (30, 31);
delivering ram air to the fuel cell process of a fuel cell by means of a pipeline (32); delivering the coolant to the fuel cell process on board of the aircraft;
heating the coolant by means of the fuel cell process;
cooling the fuel cell process by means of the coolant;
heating the mast (30, 31) and the pipeline (32) by means of the coolant;
wherein the coolant forms a coolant circuit between the fuel cell process, the mast (30, 31) and the pipeline (32).

## Revendications

1. Dispositif de drainage pour un avion, comprenant :
une pile à combustible ;
un tube (30, 31) pour évacuer de l'avion des liquides ou des gaz ;
une tuyauterie (32) pour l'envoi d'air dynamique dans le processus de la pile à combustible ;
un agent réfrigérant ;
le dispositif de drainage étant conçu pour le chauffage du tube (30, 31) et de la tuyauterie (32) par l'agent réfrigérant ;
l'agent réfrigérant étant envoyé dans le processus de la pile à combustible ;
le processus de la pile à combustible étant réalisé pour le chauffage de l'agent réfrigérant ;
l'agent réfrigérant étant utilisé pour le refroidissement du processus de la pile à combustible ; et
l'agent réfrigérant se situant dans un circuit d'agent réfrigérant (5, 6).

2. Dispositif de drainage suivant la revendication 1, comprenant en outre un échangeur de chaleur (19), le tube (30, 31) pouvant être chauffé au moyen de l'échangeur de chaleur (19).

3. Dispositif de drainage suivant l'une des revendications 1 à 2, comprenant en outre :
une unité de régulation de pression (21) ;
la tuyauterie (32) présentant une zone d'extrémité ;
la tuyauterie (32), pour l'arrivée d'air dans l'avion, présentant par sa zone d'extrémité un angle de 0° à environ 45° par rapport à la direction de vol, de sorte qu'il en résulte dans la tuyauterie (32) une pression dynamique provoquée par la vitesse de vol ; et
la pression dynamique étant réglable par l'unité de régulation de pression (21).

4. Dispositif de drainage suivant l'une des revendications 1 à 3, comprenant en outre :
une surface de refroidissement (4) qui est conçue de telle sorte que l'agent réfrigérant peut être refroidi par la surface (4) avant son arrivée dans le processus de la pile à combustible.

5. Dispositif de drainage suivant l'une des revendications 1 à 4,
le liquide à drainer étant de l'eau grise du service de bord ; et
les gaz à évacuer étant de l'air d'évacuation du processus de la pile à combustible.

6. Dispositif de drainage suivant l'une des revendications 1 à 5, comprenant en outre :
un dispositif de chauffage électrique (12) ;
le tube (30, 31) pouvant être chauffé en supplément par le dispositif de chauffage électrique (12).

7. Dispositif de drainage suivant l'une des revendications 1 à 6, comprenant en outre un dispositif pour la commutation d'un processus de pompe à chaleur,
le processus de pompe à chaleur élevant une puissance calorifique pour le chauffage du tube (30, 31) ou une puissance frigorifique pour le refroidissement du processus thermique ou électrochimique (22).

8. Avion, comprenant un dispositif de drainage suivant l'une des revendications 1 à 7.

9. Avion suivant la revendication 8, comprenant en outre une cabine avec un air de cabine ; le dispositif de drainage comprenant :
un compresseur d'air (15) et ;
une soupape d'inversion (26) ;
le compresseur d'air (15) étant réalisé pour une compression supplémentaire de l'air dynamique ; et le compresseur d'air (15) pouvant être commuté sur l'air de cabine par l'intermédiaire de la soupape d'inversion (26).

10. Procédé d'évacuation de liquides ou de gaz d'un avion par un dispositif de drainage avec un tube (30, 31) et un agent réfrigérant, comprenant les étapes suivantes :
évacuation de liquides ou de gaz de l'avion au travers du tube (30, 31) ;
arrivée d'air dynamique dans le processus d'une pile à combustible par une tuyauterie (32) ;
arrivée de l'agent réfrigérant dans le processus de pile à combustible à bord de l'avion ; chauffage de l'agent réfrigérant par le processus de la pile à combustible ; et
refroidissement du processus de la pile à combustible par l'agent réfrigérant ; et
chauffage du tube (30, 31) et de la tuyauterie (32) par l'agent réfrigérant ;
l'agent réfrigérant formant un circuit d'agent réfrigérant entre le processus de la pile à combustible, le tube (30, 31) et la tuyauterie (32).
